(19) **Europäisches Patentamt**
**European Patent Office**
**Office européen des brevets**

(11) **EP 3 819 194 B1**

(12) **EUROPEAN PATENT SPECIFICATION**

(45) Date of publication and mention
of the grant of the patent:
**15.11.2023 Bulletin 2023/46**

(51) International Patent Classification (IPC):
**B62D 15/02** *(2006.01)*   **G05D 1/00** *(2006.01)*
**G08G 1/16** *(2006.01)*

(21) Application number: **21164493.5**

(52) Cooperative Patent Classification (CPC):
**B62D 15/0285**

(22) Date of filing: **24.03.2021**

(54) **AUTOMATIC PARKING METHOD AND APPARATUS, AND ELECTRONIC DEVICE**

AUTOMATISCHES EINPARKVERFAHREN UND VORRICHTUNG UND ELEKTRONISCHES GERÄT

PROCÉDÉ ET APPAREIL DE STATIONNEMENT AUTOMATIQUE, ET DISPOSITIF ELECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2020 CN 202010606003**

(43) Date of publication of application:
**12.05.2021 Bulletin 2021/19**

(73) Proprietor: **BEIJING BAIDU NETCOM SCIENCE AND**
**TECHNOLOGY CO. LTD.**
**100085 Beijing (CN)**

(72) Inventor: **ZHANG, Lianchuan**
**Beijing, 100085 (CN)**

(74) Representative: **Maiwald GmbH**
**Elisenhof**
**Elisenstraße 3**
**80335 München (DE)**

(56) References cited:
**DE-A1-102017 212 044     KR-A- 20160 066 776**
**US-A1- 2017 123 421**

**Description**

**TECHNICAL FIELD**

The application relates to fields of automatic driving, autonomous parking and computer vision technologies, and in particular to an automatic parking method and apparatus, an electronic device, and a storage medium.

**BACKGROUND**

With the development of vehicle-auxiliary driving technology, a trend for vehicle intelligence development is rapid. In order to realize intelligent parking, automatic driving and autonomous parking systems have emerged to help drivers.

H-AVP (Homezone Auto Valet Parking) is an auxiliary parking product designed for fixed parking spaces in home and company scenarios. In the process of autonomous parking, it is very important for autonomous parking to look out a fixed parking space that is allowed to park.

KR20160066776A discloses a system and method for supporting autonomous parking of a vehicle according to the features of the preamble of claims 1 and 8.

**SUMMARY**

According to an aspect of the application, an automatic parking method is provided as defined in claim 1.

According to another aspect of the application, an automatic parking apparatus is provided as defined in claim 8.

According to another aspect of the application, an electronic device is provided as defined in claim 13.

According to another aspect of the application, a non-transitory computer-readable storage medium having computer instructions stored thereon is provided as defined in claim 14.

According to another aspect of the application, a computer program product is provided as defined in claim 15.

It should be understood that the content described in this section is not intended to identify the key or important features of the examples of the application, nor to limit the scope of the application. Other features of the application will be easily understood through the following descriptions.

**BRIEF DESCRIPTION OF THE DRAWINGS**

The drawings are used to better understand this solution, and do not constitute a limitation to the application, wherein:

FIG. 1 is a flowchart of an automatic parking method according to a first example of the application.
FIG. 2 is a flowchart of an automatic parking method according to a second example of the application.
FIG. 3 is a flowchart of an automatic parking method according to a third example of the application.
FIG. 4 is a flowchart of an automatic parking method according to a fourth example of the application.
FIG. 5 is a flowchart of an automatic parking method according to a fifth example of the application.
FIG. 6 is a flowchart of an automatic parking method according to a sixth example of the application.
FIG. 7 is a flowchart of an automatic parking method according to a seventh example of the application.
FIG. 8 is a flowchart of an automatic parking method according to an eighth example of the application.
FIG. 9 is a schematic block diagram of an automatic parking apparatus according to examples of the application.
FIG. 10 is a block diagram of an electronic device configured to implement the automatic parking method according to examples of the application.

**DETAILED DESCRIPTION**

The examples of the application are described below with reference to the accompanying drawings, which include various details of the examples of the application to facilitate understanding, and should be regarded as merely exemplary. Likewise, for clarity and conciseness, descriptions of well-known functions and structures are omitted in the following description.

The following describes an automatic parking method and apparatus, an electronic device, and a storage medium according to the examples of the application with reference to the accompanying drawings.

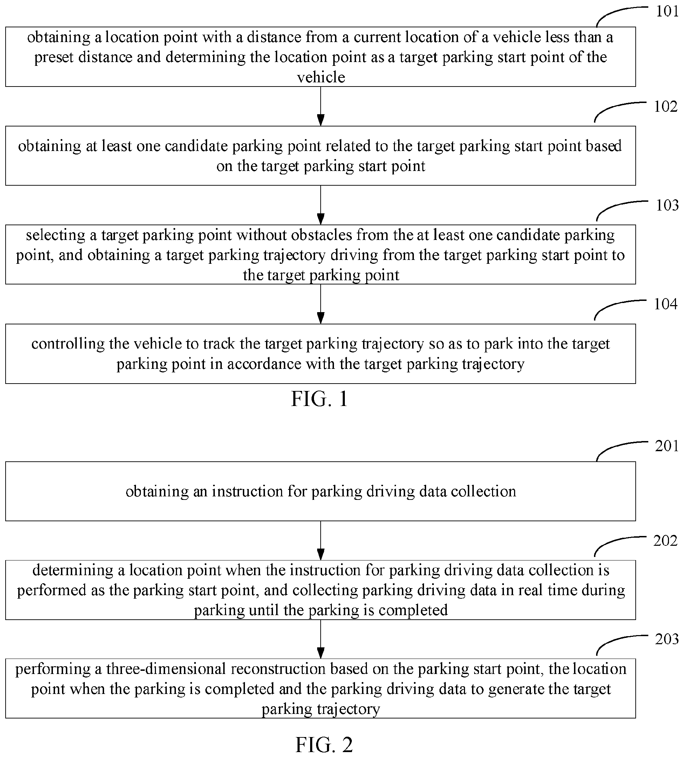

FIG. 1 is a schematic diagram of an automatic parking method according to a first example of the application. It should be noted that the execution object of the automatic parking method in this example is an automatic parking apparatus that may be implemented in software and/or hardware. The apparatus may be installed in or communicated with the vehicle. An electronic device that controls the apparatus may include a terminal device or a server.

As illustrated in FIG. 1, the automatic parking method may include the following steps.

In block 101, a location point with a distance from a current location of a vehicle less than a preset distance is obtained and the location point is determined as a target parking start point of the vehicle.

In the example of the application, when the user has an autonomous parking demand for the vehicle, the autonomous parking function in the vehicle may be initiated by triggering a control corresponding to the autonomous parking function in the vehicle. After the autonomous parking function is initiated, the current location of the vehicle may be thus obtained through a positioning device in the vehicle, such as a GPS system (global positioning system), a satellite positioning system, etc.

In other examples of the application, when the user needs the vehicle to automatically drive from the current parking location to a designated parking space, a corresponding control instruction may be sent to the vehicle through a smart terminal of the user. The control instruction is accordingly received by the vehicle and the current location of the vehicle is obtained through the positioning device in the vehicle in response to the control instruction.

It should be noted that, the example of the application is a solution where the autonomous parking is performed based on the stored parking data for the user, and the start point may be a location point when the parking data for the user is to be collected. Generally, it is impossible for each parking to guarantee the vehicle will be parked by the user at exactly the same location, so it is necessary to select a location with a distance from the current location of the vehicle less than a preset distance as the target parking start point of the vehicle when performing autonomous parking.

It should be understood that, the parking data for the user may be stored in a storage device provided on the vehicle, or may be stored via a server that wirelessly communicates with the vehicle, which is not limited in this application.

The preset distance may be a distance with a small error such as 0.5 meters. It should be understood that since the autonomous parking in the application is performed based on the stored parking trajectory, when tracking the target parking trajectory with a large error distance (for example, more than 5 meters), a problem will easily occur that the target parking trajectory is still not tracked even through the entire tracking process is completed. At this time, it is considered that the current location deviates from the parking start point for autonomous parking, and a deviation reminder is provided to the user.

In block 102, at least one candidate parking point related to the target parking start point is obtained based on the target parking start point.

It should be noted that, in environments such as parking lots and open spaces, parking spaces are usually arranged one by one close to each other. Therefore, one location point may correspond to a plurality of parking points. At least one candidate parking point should be a parking point for which the parking data have been collected by the user. For example, when a fixed parking space may be obtained by leasing, allocating and so on from a community parking lot and/or company parking lot and the user has only collected parking data on this leased or allocated parking space, so there is one candidate parking point corresponding to the location point. However, when the community parking lot and/or company parking lot are public, the user may collect parking data from a plurality of parking spaces to form a plurality of candidate parking points.

It should be understood that since the application obtains candidate parking points directly through the target parking start point, the parking points involved in the application may not be limited to standard parking points drawn with parking signs, but may also be other location points that are able to accommodate vehicles based on the user's judgment, such as open areas, empty spaces adjacent to unit doors, etc.

In block 103, a target parking point without obstacles is selected from at least one candidate parking point, and a target parking trajectory driving from the target parking start point to the target parking point is obtained.

It should be understood that since the target parking point is obtained based on the user's parking data in memory, it is necessary to verify whether at least one candidate parking point is suitable for parking at this time. The condition for suitable parking includes there are no obstacles in the candidate parking point. The obstacles may be for example other vehicles, trees, blocking posts or no-parking posts.

Further, in this example, image collection may be performed at the candidate parking point by the image collection device provided on the vehicle, so that it is identified whether there is an obstacle in the candidate parking point according to the image information.

The vehicle in this example may be equipped with fisheye cameras on the windshield and the side direction of the vehicle respectively, so that the vehicle is enabled to detect obstacles in candidate parking points in different directions of the vehicle. For example, the candidate parking points may be located at the front, side front, side and side rear of the vehicle.

Further, after the target parking start point and the target parking point are obtained, the target parking trajectory of the vehicle from the target parking start point to the target parking point may be obtained based on the stored parking data.

In block 104, the vehicle is controlled to track the target parking trajectory so as to park into the target parking point in accordance with the target parking trajectory.

It should be noted that the tracking is performed based on a trace. In the application, the vehicle tracks the target parking point in accordance with the target parking trajectory, so that the vehicle may be autonomously parked into the target parking point in accordance with the target parking trajectory.

It should be understood that, there may be not an open space such as a parking lot for the space of target parking point in places such as old communities. For example, when the target parking point is located at an open space adjacent to a unit door and there may be also laundry racks placed outside the window or window security bars installed nearby the target parking point, parking posture of the vehicle is adjusted by the user for many times or a specific parking trajectory is employed for parking, in order to prevent the laundry rack or the installed window security bar from scratching the vehicle when parking the vehicle. Therefore, it is necessary to imitate the user's parking data as much as possible during autonomous parking, so as to avoid problems such as scratching the vehicle caused by saving a number of posture adjustments and increasing the parking speed.

Therefore, with the automatic parking method in the application, autonomous parking may be performed based on the parking points used by the user, which effectively avoids problems such as failing to park caused by leak detection on parking spaces and greatly increases the parking rate for the autonomous parking. In addition, the application effectively avoids problems such as failing to park or scratching the vehicle due to re-planning the path in a specific environment, by tracking the parking trajectory and parking in accordance with the parking trajectory.

In order to further illustrate the above examples, before obtaining a location point with a distance from a current location of a vehicle less than a preset distance and determining the location point as a target parking start point of the vehicle in block 101, the method further includes the following steps as illustrated in FIG. 2.

In block 201, an instruction for parking driving data collection is obtained.

In block 202, a location point when the instruction for parking driving data collection is performed is determined as the parking start point, and parking driving data is collected in real time during parking until the parking is completed.

In block 203, a three-dimensional reconstruction is performed based on the parking start point, the location point at the end of the parking, and the parking driving data to generate the target parking trajectory.

The collected parking start point may be determined by a center location of the vehicle before parking, and the location point when the parking is completed may be determined by a center location of the vehicle after parking. Optionally, a center point of rear axle in the vehicle may be collected first and the center location of the vehicle is then calculated based on the center point of rear axle, which is then determined as the parking start point and/or the location point when the parking is completed.

In other words, in the examples of the application, before the autonomous parking function is served for autonomous parking, parking driving data of the vehicle operated by the user may be firstly collected in response to the instruction for parking driving data collection triggered by the user, and a three-dimensional reconstruction is performed based on the parking start point, the location point at the end of the parking, and the parking driving data, to generate the target parking trajectory. In this way, the target parking trajectory generated when the user operates the parking may be tracked during the autonomous parking by the vehicle itself, and the parking rate for the autonomous parking is increased.

It should be understood that a computer vision-based method may be used to collect parking driving data.

As a possible implementation, the vehicle's driving trajectory video may be collected through an collecting module in the vehicle, and the parking trajectory video may be obtained from the driving trajectory video based on characteristics of parking trajectory, so that a three-dimensional reconstruction is performed on the parking trajectory video to obtain the parking trajectory in the parking trajectory video.

As another possible implementation, the vehicle's driving trajectory may be collected in real time and saved through the GPS system, and the saved driving trajectory may be exported into kml or gpx format data, which in turn are loaded into a virtual map software to obtain the parking trajectory path of the vehicle.

The virtual map software may be configured to arrange satellite photos, aerial photographs and a GIS (geographic information system) on a three-dimensional model of the earth. For example, the virtual map software may be a Google Earth.

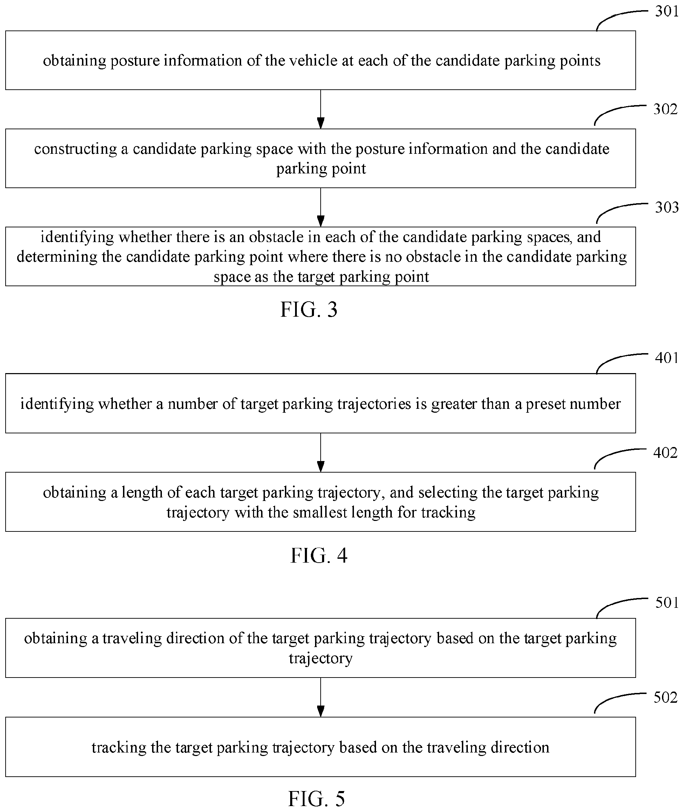

In order to further describe the above examples, selecting a target parking point without obstacles from at least one candidate parking point in block 103 includes the following steps as illustrated in FIG. 3.

In block 301, posture information of the vehicle is obtained at each candidate parking point.

The posture information may include a direction of vehicle body and the like.

In block 302, a candidate parking space is constructed with the posture information and the candidate parking point.

The candidate parking space is constructed based on the candidate parking point with tools such as three-dimensional modeling. Optionally, the candidate parking point may be determined as a center location of candidate parking space when constructing the candidate parking space.

In block 303, it is identified whether there is an obstacle within the candidate parking space, and a candidate parking point where there is no obstacle in the candidate parking space is determined as the target parking point.

It should be understood that when the location point when the parking is completed is obtained for example through a GPS system, the obtained data is usually coordinate information composed of a latitude and a longitude, but the vehicle is an object with a certain spatial volume. In addition, the posture of vehicle and the occupied space are both different even at the same location. For example, the vehicle beside the sidewalk may usually present a variety of directions of vehicle body such as perpendicular to the sidewalk, parallel to the sidewalk, and 45° angle to the sidewalk. Therefore, before identifying whether there is an obstacle at the target parking point, it is necessary to construct a candidate parking space based on the stored posture information of vehicle at the candidate parking point to determine the space occupied by the vehicle when parking into the candidate parking point. In this way, the target parking point identified based on the candidate parking space is more suitable for automatic parking, so that there is no problems such as the vehicle is scratched when parking into the target parking point.

As a feasible example, when constructing the candidate parking space for the target parking point, a parking space may also be established synchronously based on the target parking trajectory to identify whether the vehicle encounters obstacles in accordance with the target parking trajectory, which avoids scratching when the vehicle is parked in accordance with the target parking trajectory.

Further, before controlling the vehicle to track the target parking trajectory in block 104, the method further includes the following steps as illustrated in FIG. 4.

In block 401, it is identified whether a number of target parking trajectories is greater than a preset number.

In block 402, a length of each target parking track is obtained, and a target parking track with the smallest length is selected for tracking.

The preset number may be 1.

In other words, it is necessary to further select one unique parking trajectory from a plurality of target parking trajectories for tracking when there are the plurality of target parking trajectories to be tracked, which avoids occurrence of a problem that for example one target parking trajectory is tracked at a previous moment while another target parking trajectory is tracked at a later moment, or a problem that a third parking trajectory formed by center points of two target parking trajectories is tracked.

Further, the target parking trajectory with the smallest length may be a target parking trajectory generated based on the target parking point closest to the target parking start point, or a target parking trajectory formed based on the minimum number of vehicle posture adjustments or the minimum number of gear changes, etc.

It should be understood that, the target parking trajectory is selected based on the length of target parking trajectory, which may effectively reduce the consumption in autonomous parking and save energy.

Further, controlling the vehicle to track the target parking trajectory in block 104 includes the following as illustrated in FIG. 5.

In block 501, a traveling direction of the target parking trajectory is obtained based on the target parking trajectory.

The traveling direction of the corresponding target parking trajectory may be determined by detecting and identifying gear information of the vehicle in the target parking trajectory.

It should be understood that, one target parking trajectory may include at least one travelling direction. For example, there is usually only one traveling direction (i.e., a forward direction) in a parking mode where the vehicle head enters the parking space first, while there is a change from a reverse direction to a forward direction.

In block 502, the target parking trajectory is tracked based on the traveling direction.

It should be noted that, since steering wheels of the vehicle are usually front wheels, different driving trajectories may be formed in the forward direction and the reverse direction at the same front wheel steering angle. In other words, it is difficult to achieve the expected tracking effect in case that control strategy in the reverse direction is applied to the target driving trajectory generated when the forward direction is executed. Similarly, it is also difficult to achieve the expected tracking effect in case that control strategy in the forward direction is applied to the target driving trajectory generated when the reverse direction is executed.

Therefore, in this example, the traveling direction of target parking trajectory is identified, it is further ensured that the vehicle may track the target parking trajectory from the current location as soon as possible during autonomous parking, thereby increasing the success rate of autonomous parking.

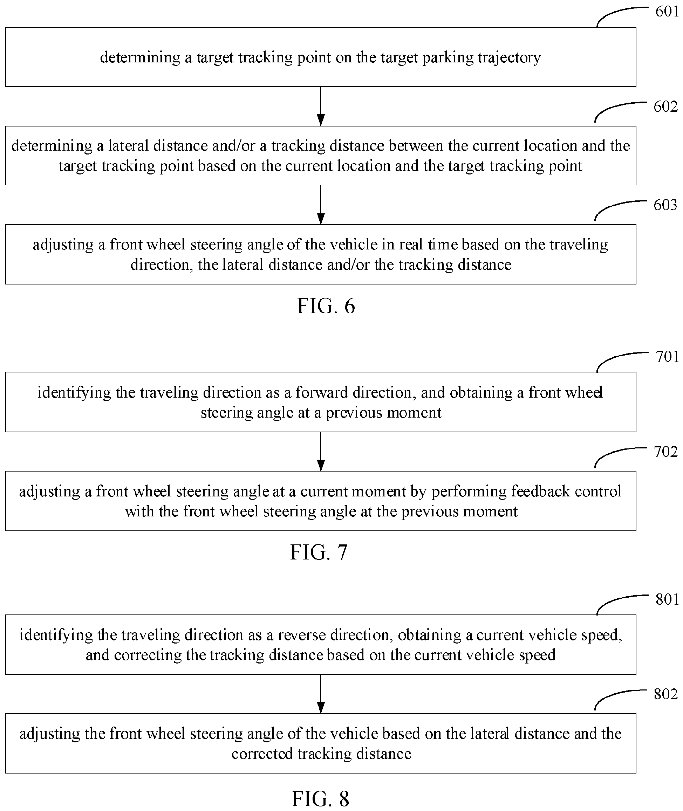

In order to further describe the above examples, tracking the target parking trajectory based on the traveling direction in block 502 includes the following steps as illustrated in FIG. 6.

In block 601, a target tracking point is determined on the target parking trajectory.

The target tracking point may be a point expected to track the target parking trajectory. It should be understood that the target tracking point is a point on the target parking trajectory.

In block 602, a lateral distance and/or a tracking distance between the current location and the target tracking point are determined based on the current location and the target tracking point.

The lateral distance is a parallel distance between a front axle of vehicle and a direction of target parking trajectory, and the tracking distance is an actual distance between the front axle of vehicle and the target tracking point.

In block 603, a front wheel steering angle of the vehicle is adjusted in real time based on the traveling direction, the lateral distance and/or the tracking distance.

Therefore, in this example, the target tracking point is selected to determine the lateral distance between the current location and the target tracking point. In this way, the lateral error in tracking by the vehicle the target parking trajectory may be reduced as soon as possible, and the vehicle is prevented from completing a parking action parallel to the target parking trajectory, thereby increasing the success rate of autonomous parking.

Further, when the traveling direction is the forward direction, adjusting the front wheel steering angle of the vehicle in real time based on the traveling direction, the lateral distance and/or the tracking distance in the above block 603 includes the following steps as illustrated in FIG. 7.

In block 701, the traveling direction is identified as a forward direction, and a front wheel steering angle at a previous moment is obtained.

In block 702, a front wheel steering angle is adjusted at a current moment by performing feedback control with the front wheel steering angle at the previous moment.

In other words, in the example of the application, the front wheel steering angle may be adjusted through a control strategy of feedback adjustment when the travelling direction of target parking trajectory is a forward direction, so that the front wheel steering angle may be adjusted as quickly as possible through the feedback adjustment to meet posture needs of target parking trajectory, thereby increasing the success rate of autonomous parking.

Optionally, the following equation may be used for the feedback adjustment on the front wheel steering angle:

$$\delta(t) = \theta_e(t) + \tan^{-1}(k_1 e_{fa}(t)) + k_2 * (\delta(t) - \delta(t-1))$$

where $\delta(t)$ is the front wheel steering angle, $\theta_e(t)$ is a heading error, $e_{fa}(t)$ is a lateral distance in the forward direction, t is the time, and $k_1$ is a coefficient for adjusting parameters. The heading error is an error between a direction of vehicle body and a direction of target parking trajectory.

Correspondingly, when the travel direction is a reverse direction, adjusting the front wheel steering angle of the vehicle in real time based on the traveling direction, the lateral distance and/or the tracking distance in the above block 603 includes the following steps as illustrated in FIG. 8.

In block 801, the traveling direction is identified as a reverse direction, a current vehicle speed is obtained, and the tracking distance is corrected based on the current vehicle speed.

In block 802, the front wheel steering angle of the vehicle is adjusted based on the lateral distance and the corrected tracking distance.

In other words, the tracking distance is a function of vehicle speed. According to different vehicle speeds, different tracking distances need to be selected so as to track the target parking trajectory as soon as possible at the current vehicle speed, thereby increasing the success rate of autonomous parking.

Optionally, the following equation may be used to adjust the front wheel steering angle:

$$\delta(t) = \tan^{-1}\left(\frac{L e_{lateral}}{k v(t) l_{look\_ahead\_dist}}\right)$$

where $\delta(t)$ is the front wheel steering angle, *L* is the axle length of the vehicle, $e_{lateral}$ is the lateral distance in a reverse direction, $v(t)$ is the vehicle speed, $l_{look\_ahead\_dist}$ is the tracking distance, and k is a coefficient for adjusting parameters.

In summary, with the automatic parking method in the application, autonomous parking may be performed based on the parking points used by the user, which effectively avoids problems such as failing to park caused by leak detection on parking spaces and greatly increases the parking rate for the autonomous parking. In addition, the application effectively avoids problems such as failing to park or scratching the vehicle due to re-planning the path in a specific environment, by tracking the parking trajectory and parking in accordance with the parking trajectory.

In order to implement the above examples, an example of the application also provides an automatic parking apparatus.

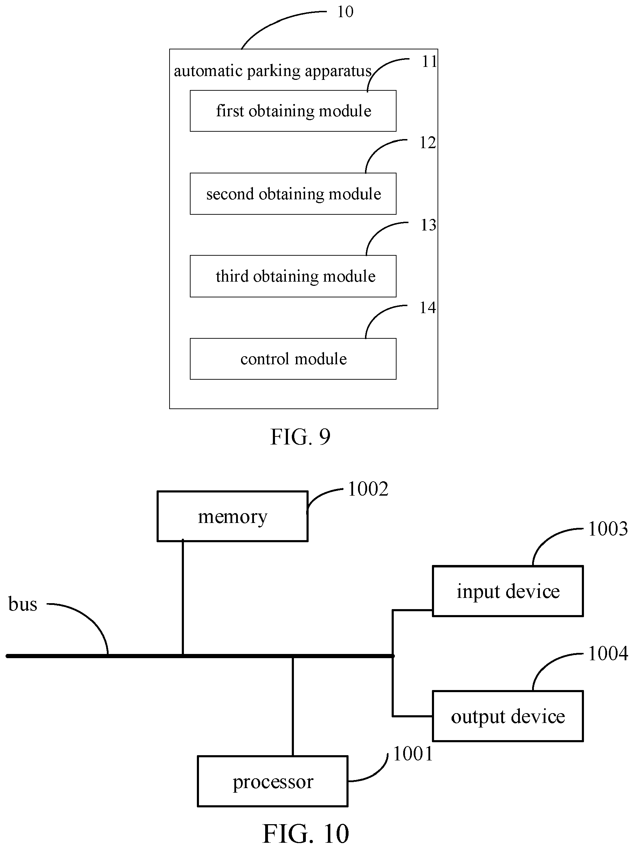

FIG. 9 is a block diagram of an automatic parking apparatus according to an example of the application. As illustrated in FIG. 9, the automatic parking apparatus 10 of the example of the application includes a first obtaining module 11, a second obtaining module 12, a third obtaining module 13 and a control module 14.

The first obtaining module 11 is configured to obtain a location point with a distance from a current location of a vehicle less than a preset distance and determine the location point as a target parking start point of the vehicle. The second obtaining module 12 is configured to obtain at least one candidate parking point related to the target parking start point based on the target parking start point. The third obtaining module 13 is configured to select a target parking point without obstacles from the at least one candidate parking point, and obtain a target parking trajectory driving from the target parking start point to the target parking point. The control module 14 is configured to control the vehicle to track the target parking trajectory so as to park into the target parking point in accordance with the target parking trajectory.

In some examples, the automatic parking apparatus 10 further includes a fourth obtaining module, a collecting module and a reconstructing module.

The fourth obtaining module is configured to obtain an instruction for parking driving data collection.

The collecting module is configured to determine a location point when the instruction for parking driving data collection is performed as the parking start point, and collect parking driving data in real time during parking until the parking is completed.

The reconstructing module is configured to perform a three-dimensional reconstruction based on the parking start point, the location point when the parking is completed and the parking driving data to generate the target parking trajectory.

In some examples, the third obtaining module 13 includes a first obtaining sub-module, a constructing sub-module and a first identifying sub-module.

The first obtaining sub-module is configured to obtain posture information of the vehicle at each of the candidate parking points.

The constructing sub-module is configured to construct a candidate parking space with the posture information and the candidate parking point.

The first identifying sub-module is configured to identify whether there is an obstacle in each of the candidate parking spaces, and determine the candidate parking point where there is no obstacle in the candidate parking space as the target parking point.

In some examples, the third obtaining module 13 includes a second identifying sub-module and a second obtaining sub-module.

The second identifying sub-module is configured to identify whether a number of target parking trajectories is greater than a preset number.

The second obtaining sub-module is configured to obtain a length of each target parking trajectory, and select the target parking trajectory with the smallest length for tracking.

In some examples, the control module 14 includes a third obtaining sub-module and a tracking sub-module.

The third obtaining sub-module is configured to obtain a traveling direction of the target parking trajectory based on the target parking trajectory.

The tracking sub-module is configured to track the target parking trajectory based on the traveling direction.

In some examples, the tracking sub-module is specifically configured to determine a target tracking point on the target parking trajectory; determine a lateral distance and/or tracking distance between the current location and the target tracking point based on the current location and the target tracking point; and adjust a front wheel steering angle of the vehicle in real time based on the traveling direction, the lateral distance and/or the tracking distance.

In some examples, the tracking sub-module is specifically configured to identify the traveling direction as a forward direction, and obtain a front wheel steering angle at a previous moment; and adjust a front wheel steering angle at a current moment by performing feedback control with the front wheel steering angle at the previous moment.

In some examples, the tracking sub-module is specifically configured to identify the traveling direction as a reverse direction, obtain a current vehicle speed, and correct the tracking distance based on the current vehicle speed; and adjust the front wheel steering angle of the vehicle based on the lateral distance and the corrected tracking distance.

It should be noted that the above explanations about the examples of the automatic parking method are also applicable to the automatic parking apparatus in this example, which will not be repeated here.

According to the automatic parking apparatus of the application, autonomous parking may be performed based on the parking points used by the user, which effectively avoids problems such as failing to park caused by leak detection on parking spaces and greatly increases the parking rate for the autonomous parking. In addition, the application effectively avoids problems such as failing to park or scratching the vehicle due to re-planning the path in a specific environment, by tracking the parking trajectory and parking in accordance with the parking trajectory.

According to the examples of the application, the application also provides an electronic device and a readable storage medium.

As illustrated in FIG. 10, it is a block diagram of an electronic device configured to implement the automatic parking method according to an example of the application. The electronic device is intended to represent various forms of digital computers, such as such as a laptop computer, a desktop computer, a workstation, a personal digital assistant, a server, a blade server, a mainframe computer and other suitable computers. The electronic device may also represent various forms of mobile devices, such as a personal digital processing, a cellular phone, a smart phone, a wearable device and other similar computing devices. The components, connections and relationships of the components, and functions of the components illustrated herein are merely examples, and are not intended to limit the implementation of the application described and/or claimed herein.

As illustrated in FIG. 10, the electronic device includes: one or more processors 1001, a memory 1002, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other examples, a plurality of processors and/or buses may be used with a plurality of memories and processors, if desired. Similarly, a plurality of electronic devices can be connected, each providing some of the necessary operations (for example, as a server array, a group of blade servers, or a multiprocessor system). A processor 1001 is taken as an example in FIG. 10.

The memory 1002 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the automatic parking method according to the application.

As a non-transitory computer-readable storage medium, the memory 1002 may be configured to store non-transitory software programs, non-transitory computer-executable programs and modules, such as program instructions/modules (for example, the first obtaining module 11, the second obtaining module 12, the third obtaining module 13 and the control module 14 illustrated in FIG. 9) corresponding to the automatic parking method in the examples of the application. The processor 1001 executes various functional applications and data processing of the server by running non-transient software programs, instructions, and modules stored in the memory 1002, that is, implementing the automatic parking method in the foregoing method examples.

The memory 1002 may include a storage program area and a storage data area, where the storage program area may store an operating system and application programs required for at least one function. The storage data area may store data created according to the use of the electronic device for implementing the method. In addition, the memory 1002 may include a high-speed random access memory, and a non-transitory memory, such as at least one magnetic disk storage device, a flash memory device, or other non-transitory solid-state storage device. In some examples, the memory 1002 may optionally include a memory remotely disposed with respect to the processor 1001, and these remote memories may be connected to the electronic device for implementing the method through a network. Examples of the above network include, but are not limited to, the Internet, an intranet, a local area network, a mobile communication network, and combinations thereof.

The electronic device for implementing the method may further include: an input device 1003 and an output device 1004. The processor 1001, the memory 1002, the input device 1003, and the output device 1004 may be connected through a bus or in other manners. In FIG. 10, the connection through the bus is taken as an example.

The input device 1003 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 1004 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some examples, the display device may be a touch screen.

Various examples of the systems and technologies described herein may be implemented in digital electronic circuit systems, integrated circuit systems, application specific integrated circuits (ASICs), computer hardware, firmware, software, and/or combinations thereof. These various examples may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

According to the technical solutions of the examples of the application, the automatic parking apparatus of the application may perform autonomous parking based on the parking points used by the user, which effectively avoids problems such as failing to park caused by leak detection on parking spaces and greatly increases the parking rate for the autonomous parking. In addition, the application effectively avoids problems such as failing to park or scratching the vehicle due to re-planning the path in a specific environment, by tracking the parking trajectory and parking in accordance with the parking trajectory.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

## Claims

1. An automatic parking method, comprising:

    obtaining (101) a location point with a distance from a current location of a vehicle less than a preset distance and determining the location point as a target parking start point of the vehicle;
    obtaining (102) at least one candidate parking point related to the target parking start point based on the target parking start point;
    selecting (103) a target parking point without obstacles from the at least one candidate parking point, and obtaining a target parking trajectory driving from the target parking start point to the target parking point; and
    controlling (104) the vehicle to track the target parking trajectory so as to park into the target parking point in accordance with the target parking trajectory;
    **characterized in that**, the selecting (103) step comprises:

    obtaining (301) posture information of the vehicle at each of the candidate parking points;
    constructing (302) a candidate parking space with the posture information and the candidate parking point; and
    identifying (303) whether there is an obstacle in each of the candidate parking spaces, and determining the candidate parking point where there is no obstacle in the candidate parking space as the target parking point.

2. The method of claim 1, wherein before obtaining the location point with the distance from the current location of the vehicle less than the preset distance and determining the location point as the target parking start point of the vehicle, further comprising:

    obtaining (201) an instruction for parking driving data collection;
    determining (202) a location point when the instruction for parking driving data collection is performed as the parking start point, and collecting parking driving data in real time during parking until the parking is completed; and
    performing (203) a three-dimensional reconstruction based on the parking start point, the location point when the parking is completed and the parking driving data to generate the target parking trajectory.

3. The method of claim 1 or 2, wherein before controlling the vehicle to track the target parking trajectory, further comprising:

identifying (401) whether a number of target parking trajectories is greater than a preset number; and
obtaining (402) a length of each target parking trajectory, and selecting the target parking trajectory with the smallest length for tracking.

4. The method of any one of claims 1-3, wherein controlling the vehicle to track the target parking trajectory comprises:

obtaining (501) a traveling direction of the target parking trajectory based on the target parking trajectory; and
tracking (502) the target parking trajectory based on the traveling direction.

5. The method any one of claims 1-4, wherein tracking the target parking trajectory based on the traveling direction comprises:

determining (601) a target tracking point on the target parking trajectory;
determining (602) a lateral distance and/or a tracking distance between the current location and the target tracking point based on the current location and the target tracking point; and
adjusting (603) a front wheel steering angle of the vehicle in real time based on the traveling direction, the lateral distance and/or the tracking distance.

6. The method of any one of claims 1-5, wherein adjusting the front wheel steering angle of the vehicle in real time based on the traveling direction, the lateral distance and/or the tracking distance comprises:

identifying (701) the traveling direction as a forward direction, and obtaining a front wheel steering angle at a previous moment; and
adjusting (702) a front wheel steering angle at a current moment by performing feedback control with the front wheel steering angle at the previous moment.

7. The method of any one of claims 1-5, wherein adjusting the front wheel steering angle of the vehicle in real time based on the traveling direction, the lateral distance and/or the tracking distance comprises:

identifying (801) the traveling direction as a reverse direction, obtaining a current vehicle speed, and correcting the tracking distance based on the current vehicle speed; and
adjusting (802) the front wheel steering angle of the vehicle based on the lateral distance and the corrected tracking distance.

8. An automatic parking apparatus (10), comprising:

a first obtaining module (11), configured to obtain a location point with a distance from a current location of a vehicle less than a preset distance and determine the location point as a target parking start point of the vehicle;
a second obtaining module (12), configured to obtain at least one candidate parking point related to the target parking start point based on the target parking start point;
a third obtaining module (13), configured to select a target parking point without obstacles from the at least one candidate parking point, and obtain a target parking trajectory driving from the target parking start point to the target parking point; and
a control module (14), configured to control the vehicle to track the target parking trajectory so as to park into the target parking point in accordance with the target parking trajectory;
**characterized in that**, the third obtaining module (13) comprises:

a first obtaining sub-module configured to obtain posture information of the vehicle at each of the candidate parking points;
a constructing sub-module configured to construct a candidate parking space with the posture information and the candidate parking point; and
a first identifying sub-module configured to identify whether there is an obstacle in each of the candidate parking spaces, and determining the candidate parking point where there is no obstacle in the candidate parking space as the target parking point.

9. The apparatus of claim 8, further comprising:

a fourth obtaining module configured to obtain an instruction for parking driving data collection;

a collecting module configured to determine a location point when the instruction for parking driving data collection is performed as the parking start point, and collecting parking driving data in real time during parking until the parking is completed; and

a reconstructing module configured to perform a three-dimensional reconstruction based on the parking start point, the location point when the parking is completed and the parking driving data to generate the target parking trajectory.

10. The apparatus of claim 9, wherein the control module comprises:

a third obtaining sub-module, configured to obtain a traveling direction of the target parking trajectory based on the target parking trajectory; and
a tracking sub-module, configured to track the target parking trajectory based on the traveling direction;
wherein the tracking sub-module is specifically configured to:

determine a target tracking point on the target parking trajectory;
determine a lateral distance and/or tracking distance between the current location and the target tracking point based on the current location and the target tracking point; and
adjust a front wheel steering angle of the vehicle in real time based on the traveling direction, the lateral distance and/or the tracking distance.

11. The apparatus of claim 10, wherein the tracking sub-module is specifically configured to:

identify the traveling direction as a forward direction, and obtain a front wheel steering angle at a previous moment; and
adjust a front wheel steering angle at a current moment by performing feedback control with the front wheel steering angle at the previous moment.

12. The apparatus of claim 10, wherein the tracking sub-module is specifically configured to:

identify the traveling direction as a reverse direction, obtain a current vehicle speed and correct the tracking distance based on the current vehicle speed; and
adjust the front wheel steering angle of the vehicle based on the lateral distance and the corrected tracking distance.

13. An electronic device, comprising:

at least one processor; and
a memory communicatively coupled to the at least one processor;
wherein the memory is configured to store instructions executable by the at least one processor, when the instructions are executed by the at least one processor, the at least one processor is configured to execute an automatic parking method of any one of claims 1-7.

14. A non-transitory computer-readable storage medium having computer instructions stored thereon, wherein the computer instructions are configured to cause a computer to execute an automatic parking method of any one of claims 1-7.

15. A computer program product, wherein when instructions in the computer program product are executed by a processor, an automatic parking method of any one of claims 1-7 is implemented.

**Patentansprüche**

1. Automatisches Einparkverfahren, umfassend:

Erhalten (101) eines Positionspunktes mit einem Abstand von einer aktuellen Position eines Fahrzeugs, der geringer ist als ein vorab eingestellter Abstand, und Bestimmen des Positionspunktes als einen Ziel-Einpark-Startpunkt des Fahrzeugs;
Erhalten (102) mindestens eines in Frage kommenden Einparkpunktes in Bezug auf den Ziel-Einpark-Startpunkt auf Grundlage des Ziel-Einpark-Startpunktes;

Auswählen (103) eines Einpark-Zielpunktes ohne Hindernisse aus dem mindestens einen in Frage kommenden Einparkpunkt und Erhalten einer Ziel-Einpark-Fahrstrecke, die von dem Ziel-Einpark-Startpunkt zu dem Einpark-Zielpunkt führt; und

Steuern (104) des Fahrzeugs, die Ziel-Einpark-Fahrstrecke zu verfolgen, um gemäß der Ziel-Einpark-Fahrstrecke in den Einpark-Zielpunkt einzuparken;

**dadurch gekennzeichnet, dass** der Schritt des Auswählens (103) umfasst:

Erhalten (301) von Stellungsinformationen des Fahrzeugs an jedem der in Frage kommenden Einparkpunkte; und

Erzeugen (302) eines in Frage kommenden Parkraums mit den Stellungsinformationen und dem in Frage kommenden Einparkpunkt; und

Identifizieren (303), ob es ein Hindernis gibt, in jedem der in Frage kommenden Parkräume und Bestimmen des in Frage kommenden Einparkpunktes, wo es kein Hindernis in dem in Frage kommenden Parkraum gibt, als den Einpark-Zielpunkt.

2. Verfahren nach Anspruch 1, welches vor dem Erhalten des Positionspunktes mit dem Abstand von der aktuellen Position, der geringer als der vorab eingestellte Abstand ist, und dem Bestimmen des Positionspunktes als den Ziel-Einpark-Startpunkt des Fahrzeugs ferner umfasst:

Erhalten (201) einer Anweisung zum Zusammenstellen von Einpark-Fahrdaten;

Bestimmen (202) eines Positionspunktes, wenn die Anweisung zum Zusammenstellen von Einpark-Fahrdaten ausgeführt wird, als den Einpark-Startpunkt und Zusammenstellen von Einpark-Fahrdaten in Echtzeit während des Einparkens, bis das Einparken abgeschlossen ist; und

Durchführen (203) einer dreidimensionalen Rekonstruktion auf Grundlage des Einpark-Startpunktes, des Positionspunktes, wenn das Einparken abgeschlossen ist, und der Einpark-Fahrdaten, um die Einpark-Fahrstrecke zu erzeugen.

3. Verfahren nach Anspruch 1 oder 2, welches vor dem Steuern des Fahrzeugs, die Ziel-Einpark-Fahrstrecke zu verfolgen, ferner umfasst:

Identifizieren (401), ob eine Anzahl an Ziel-Einpark-Fahrstrecken höher als eine vorab eingestellte Anzahl ist; und

Erhalten (402) einer Länge jeder Ziel-Einpark-Fahrstrecke und Auswählen der Ziel-Einpark-Fahrstrecke mit der geringsten Länge zum Verfolgen.

4. Verfahren nach einem der Ansprüche 1 bis 3, wobei das Steuern des Fahrzeugs, die Ziel-Einpark-Fahrstrecke zu verfolgen, umfasst:

Erhalten (501) einer Bewegungsrichtung der Ziel-Einpark-Fahrstrecke auf Grundlage der Ziel-Einpark-Fahrstrecke; und

Verfolgen (502) der Ziel-Einpark-Fahrstrecke auf Grundlage der Bewegungsrichtung.

5. Verfahren nach einem der Ansprüche 1 bis 4, wobei das Verfolgen der Ziel-Einpark-Fahrstrecke auf Grundlage der Bewegungsrichtung umfasst:

Bestimmen (601) eines Verfolgungs-Zielpunktes auf der Ziel-Einpark-Fahrstrecke;

Bestimmen (602) eines seitlichen Abstands und/oder eines Verfolgungsabstands zwischen der aktuellen Position und dem Verfolgungs-Zielpunkt auf Grundlage der aktuellen Position und des Verfolgungs-Zielpunktes; und

Anpassen (603) eines Vorderrad-Lenkwinkels des Fahrzeugs in Echtzeit auf Grundlage der Bewegungsrichtung, des seitlichen Abstands und/oder des Verfolgungsabstands.

6. Verfahren nach einem der Ansprüche 1 bis 5, wobei das Anpassen des Vorderrad-Lenkwinkels des Fahrzeugs in Echtzeit auf Grundlage der Bewegungsrichtung, des seitlichen Abstands und/oder des Verfolgungsabstands umfasst:

Identifizieren (701) der Bewegungsrichtung als eine Vorwärtsrichtung und Erhalten eines Vorderrad-Lenkwinkels in einem vorhergehenden Moment; und

Anpassen (702) eines Vorderrad-Lenkwinkels in einem aktuellen Moment durch Durchführen einer Rückführsteuerung mit dem Vorderrad-Lenkwinkel in dem vorhergehenden Moment.

7. Verfahren nach einem der Ansprüche 1 bis 5, wobei das Anpassen des Vorderrad-Lenkwinkels des Fahrzeugs in Echtzeit auf Grundlage der Bewegungsrichtung, des seitlichen Abstands und/oder des Verfolgungsabstands umfasst:

Identifizieren (801) der Bewegungsrichtung als eine Rückwärtsrichtung, Erhalten einer aktuellen Fahrzeuggeschwindigkeit und Korrigieren des Verfolgungsabstands auf Grundlage der aktuellen Fahrzeuggeschwindigkeit; und
Anpassen (802) des Vorderrad-Lenkwinkels des Fahrzeugs auf Grundlage des seitlichen Abstands und des korrigierten Verfolgungsabstands.

8. Vorrichtung zum automatischen Einparken (10), umfassend:

ein erstes Erhaltmodul (11), konfiguriert zum Erhalten eines Positionspunktes mit einem Abstand von einer aktuellen Position eines Fahrzeugs, der geringer ist als ein vorab eingestellter Abstand, und Bestimmen des Positionspunktes als einen Ziel-Einpark-Startpunkt des Fahrzeugs;
ein zweites Erhaltmodul (12), konfiguriert zum Erhalten mindestens eines in Frage kommenden Einparkpunktes in Bezug auf den Ziel-Einpark-Startpunkt auf Grundlage des Ziel-Einpark-Startpunktes;
ein drittes Erhaltmodul (13), konfiguriert zum Auswählen eines Einpark-Zielpunktes ohne Hindernisse aus dem mindestens einen in Frage kommenden Einparkpunkt und zum Erhalten einer Ziel-Einpark-Fahrstrecke, die von dem Ziel-Einpark-Startpunkt zu dem Einpark-Zielpunkt führt; und
ein Steuermodul (14), konfiguriert zum Steuern des Fahrzeugs, die Ziel-Einpark-Fahrstrecke zu verfolgen, um gemäß der Ziel-Einpark-Fahrstrecke in den Einpark-Zielpunkt einzuparken;
**dadurch gekennzeichnet, dass** das dritte Erhaltmodul (13) umfasst:

ein erstes Erhalt-Untermodul, konfiguriert zum Erhalten von Stellungsinformationen des Fahrzeugs an jedem der in Frage kommenden Einparkpunkte;
ein Erzeugungs-Untermodul, konfiguriert zum Erzeugen eines in Frage kommenden Parkraums mit den Stellungsinformationen und dem in Frage kommenden Einparkpunkt; und
ein erstes Identifizierungs-Untermodul, konfiguriert zum Identifizieren, ob es ein Hindernis gibt, in jedem der in Frage kommenden Parkräume und Bestimmen des in Frage kommenden Einparkpunktes, wo es kein Hindernis in dem in Frage kommenden Parkraum gibt, als den Einpark-Zielpunkt.

9. Vorrichtung nach Anspruch 8, ferner umfassend:

ein viertes Erhaltmodul, konfiguriert zum Erhalten einer Anweisung zum Zusammenstellen von Einpark-Fahrdaten;
ein Zusammenstellungsmodul, konfiguriert zum Bestimmen eines Positionspunktes, wenn die Anweisung zum Zusammenstellen von Einpark-Fahrdaten ausgeführt wird, als den Einpark-Startpunkt und zum Zusammenstellen von Einpark-Fahrdaten in Echtzeit während des Einparkens, bis das Einparken abgeschlossen ist; und
ein Rekonstruktionsmodul, konfiguriert zum Durchführen einer dreidimensionalen Rekonstruktion auf Grundlage des Einpark-Startpunktes, des Positionspunktes, wenn das Einparken abgeschlossen ist, und der Einpark-Fahrdaten, um die Einpark-Fahrstrecke zu erzeugen.

10. Vorrichtung nach Anspruch 9, wobei das Steuermodul umfasst:

ein drittes Erhalt-Untermodul, konfiguriert zum Erhalten einer Bewegungsrichtung der Ziel-Einpark-Fahrstrecke auf Grundlage der Ziel-Einpark-Fahrstrecke; und
ein Verfolgungs-Untermodul, konfiguriert zum Verfolgen der Ziel-Einpark-Fahrstrecke auf Grundlage der Bewegungsrichtung;
wobei das Verfolgungs-Untermodul speziell konfiguriert ist zum:

Bestimmen eines Verfolgungs-Zielpunktes auf der Ziel-Einpark-Fahrstrecke;
Bestimmen eines seitlichen Abstands und/oder eines Verfolgungsabstands zwischen der aktuellen Position und dem Verfolgungs-Zielpunkt auf Grundlage der aktuellen Position und des Verfolgungs-Zielpunktes; und
Anpassen eines Vorderrad-Lenkwinkels des Fahrzeugs in Echtzeit auf Grundlage der Bewegungsrichtung, des seitlichen Abstands und/oder des Verfolgungsabstands.

11. Vorrichtung nach Anspruch 10, wobei das Verfolgungs-Untermodul speziell konfiguriert ist zum:

Identifizieren der Bewegungsrichtung als eine Vorwärtsrichtung und Erhalten eines Vorderrad-Lenkwinkels in einem vorhergehenden Moment; und
Anpassen eines Vorderrad-Lenkwinkels in einem aktuellen Moment durch Durchführen einer Rückführsteuerung mit dem Vorderrad-Lenkwinkel in dem vorhergehenden Moment.

12. Vorrichtung nach Anspruch 10, wobei das Verfolgungs-Untermodul speziell konfiguriert ist zum:

Identifizieren der Bewegungsrichtung als eine Rückwärtsrichtung, Erhalten einer aktuellen Fahrzeuggeschwindigkeit und Korrigieren des Verfolgungsabstands auf Grundlage der aktuellen Fahrzeuggeschwindigkeit; und
Anpassen des Vorderrad-Lenkwinkels des Fahrzeugs auf Grundlage des seitlichen Abstands und des korrigierten Verfolgungsabstands.

13. Elektronisches Gerät, umfassend:

mindestens einen Prozessor; und
einen Speicher, welcher zum Datenaustausch mit dem mindestens einen Prozessor verbunden ist;
wobei der Speicher konfiguriert ist zum Speichern von Anweisungen, welche von dem mindestens einen Prozessor ausführbar sind, wobei, wenn die Anweisungen von dem mindestens einen Prozessor ausgeführt werden, der mindestens eine Prozessor konfiguriert ist zum Ausführen eines automatischen Einparkverfahrens nach einem der Ansprüche 1 bis 7.

14. Nicht-flüchtiges computerlesbares Speichermedium mit darauf gespeicherten Computeranweisungen, wobei die Computeranweisungen konfiguriert sind zum Bewirken, dass ein Computer ein automatisches Einparkverfahren nach einem der Ansprüche 1 bis 7 ausführt.

15. Computerprogrammprodukt, wobei, wenn Anweisungen in dem Computerprogrammprodukt von einem Prozessor ausgeführt werden, ein automatisches Einparkverfahren nach einem der Ansprüche 1 bis 7 realisiert wird.

**Revendications**

1. Procédé de stationnement automatique, comprenant :

obtenir (101) un point de localisation avec une distance d'une localisation courante d'un véhicule inférieure à une distance préréglée et déterminer le point de localisation comme point de départ de stationnement cible du véhicule ;
obtenir (102) au moins un point de stationnement candidat lié au point de départ de stationnement cible sur la base du point de départ de stationnement cible ;
sélectionner (103) un point de stationnement cible sans obstacles à partir du au moins un point de stationnement candidat, et obtenir une trajectoire de stationnement cible conduisant du point de départ de stationnement cible au point de stationnement cible ; et
commander (104) le véhicule pour suivre la trajectoire de stationnement cible de manière à stationner dans le point de stationnement cible selon la trajectoire de stationnement cible ;
**caractérisé en ce que**, l'étape de sélection (103) comprend :

obtenir (301) des informations de position du véhicule à chacun des points de stationnement candidats ;
construire (302) un espace de stationnement candidat avec les informations de position et le point de stationnement candidat ; et
identifier (303) s'il y a un obstacle dans chacun des espaces de stationnement candidats, et déterminer le point de stationnement candidat où il n'y a pas d'obstacle dans l'espace de stationnement candidat comme point de stationnement cible.

2. Procédé de la revendication 1, dans lequel avant d'obtenir le point de localisation avec la distance de la localisation courante du véhicule inférieure à une distance préréglée et de déterminer le point de localisation comme point de départ de stationnement cible du véhicule, comprenant en outre :

obtenir (201) une instruction pour une collecte de données de conduite de stationnement ;
déterminer (202) un point de localisation quand l'instruction pour une collecte de données de conduite de stationnement est réalisée comme point de départ de stationnement, et collecter des données d'entraînement de stationnement en temps réel pendant le stationnement jusqu'à ce que le stationnement soit achevé ; et
effectuer (203) une reconstruction tridimensionnelle sur la base du point de départ de stationnement, du point de localisation quand le stationnement est achevé et des données de conduite de stationnement pour générer la trajectoire de stationnement cible.

3. Procédé de la revendication 1 ou 2, dans lequel avant de commander le véhicule pour suivre la trajectoire de stationnement cible, comprenant en outre :

identifier (401) si un nombre de trajectoires de stationnement cibles est supérieur à un nombre préréglé ; et
obtenir (402) une longueur de chaque trajectoire de stationnement cible, et sélectionner la trajectoire de stationnement cible avec la plus petite longueur pour le suivi.

4. Procédé de l'une quelconque des revendications 1-3, dans lequel commander le véhicule pour suivre la trajectoire de stationnement cible comprend :

obtenir (501) une direction de circulation de la trajectoire de stationnement cible sur la base de la trajectoire de stationnement cible ; et
suivre (502) la trajectoire de stationnement cible sur la base de la direction de circulation.

5. Procédé de l'une quelconque des revendications 1-4, dans lequel suivre la trajectoire de stationnement cible sur la base de la direction de circulation comprend :

déterminer (601) un point de suivi de cible sur la trajectoire de stationnement cible ;
déterminer (602) une distance latérale et/ou une distance de suivi entre la localisation courante et le point de suivi de cible sur la base de la localisation courante et du point de suivi de cible ; et
ajuster (603) un angle de braquage de roue avant du véhicule en temps réel sur la base de la direction de circulation, de la distance latérale et/ou de la distance de suivi.

6. Procédé de l'une quelconque des revendications 1-5, dans lequel ajuster l'angle de braquage de roue avant du véhicule en temps réel sur la base de la direction de circulation, de la distance latérale et/ou de la distance de suivi comprend :

identifier (701) la direction de circulation comme direction avant, et obtenir un angle de braquage de roue avant à un moment précédent ; et
ajuster (702) un angle de braquage de roue avant à un moment courant en effectuant une commande à rétroaction avec l'angle de braquage de roue avant au moment précédent.

7. Procédé de l'une quelconque des revendications 1-5, dans lequel ajuster l'angle de braquage de roue avant du véhicule en temps réel sur la base de la direction de circulation, de la distance latérale et/ou de la distance de suivi comprend :

identifier (801) la direction de circulation comme direction inverse, obtenir une vitesse de véhicule courante, et corriger la distance de suivi sur la base de la vitesse de véhicule courante ; et
ajuster (802) l'angle de braquage de roue avant du véhicule sur la base de la distance latérale et de la distance de suivi corrigée.

8. Appareil de stationnement automatique (10), comprenant :

un premier module d'obtention (11), configuré pour obtenir un point de localisation avec une distance d'une localisation courante d'un véhicule inférieure à une distance préréglée et déterminer le point de localisation comme point de départ de stationnement cible du véhicule ;
un deuxième module d'obtention (12), configuré pour obtenir au moins un point de stationnement candidat lié au point de départ de stationnement cible sur la base du point de départ de stationnement cible ;

un troisième module d'obtention (13), configuré pour sélectionner un point de stationnement cible sans obstacles à partir du au moins un point de stationnement candidat, et obtenir une trajectoire de stationnement cible conduisant du point de départ de stationnement cible au point de stationnement cible ; et

un module de commande (14), configuré pour commander le véhicule pour suivre la trajectoire de stationnement cible de manière à stationner dans le point de stationnement cible selon la trajectoire de stationnement cible ; **caractérisé en ce que**, le troisième module de sélection (13) comprend :

un premier sous-module d'obtention configuré pour obtenir des informations de position du véhicule à chacun des points de stationnement candidats ;

un sous-module de construction configuré pour construire un espace de stationnement candidat avec les informations de position et le point de stationnement candidat ; et

un premier sous-module d'identification configuré pour identifier s'il y a un obstacle dans chacun des espaces de stationnement candidats, et déterminer le point de stationnement candidat où il n'y a pas d'obstacle dans l'espace de stationnement candidat comme point de stationnement cible.

**9.** Appareil de la revendication 8, comprenant en outre :

un quatrième module d'obtention configuré pour obtenir une instruction pour une collecte de données de conduite de stationnement ;

un module de collecte configuré pour déterminer un point de localisation quand l'instruction pour une collecte de données de conduite de stationnement est réalisée comme point de départ de stationnement, et collecter des données de conduite de stationnement en temps réel pendant le stationnement jusqu'à ce que le stationnement soit achevé ; et

un module de reconstruction configuré pour effectuer une reconstruction tridimensionnelle sur la base du point de départ de stationnement, du point de localisation quand le stationnement est achevé et des données de conduite de stationnement pour générer la trajectoire de stationnement cible.

**10.** Appareil de la revendication 9, dans lequel le module de commande comprend :

un troisième sous-module d'obtention, configuré pour obtenir une direction de circulation de la trajectoire de stationnement cible sur la base de la trajectoire de stationnement cible ; et

un sous-module de suivi, configuré pour suivre la trajectoire de stationnement cible sur la base de la direction de circulation ;

dans lequel le sous-module de suivi est configuré spécifiquement pour :

déterminer un point de suivi de cible sur la trajectoire de stationnement cible ;

déterminer une distance latérale et/ou distance de suivi entre la localisation courante et le point de suivi de cible sur la base de la localisation courante et du point de suivi de cible ; et

ajuster un angle de braquage de roue avant du véhicule en temps réel sur la base de la direction de circulation, de la distance latérale et/ou de la distance de suivi.

**11.** Appareil de la revendication 10, dans lequel le sous-module de suivi est configuré spécifiquement pour :

identifier la direction de circulation comme direction avant, et obtenir un angle de braquage de roue avant à un moment précédent ; et

ajuster un angle de braquage de roue avant à un moment courant en effectuant une commande à rétroaction avec l'angle de braquage de roue avant au moment précédent.

**12.** Appareil de la revendication 10, dans lequel le sous-module de suivi est configuré spécifiquement pour :

identifier la direction de circulation comme direction inverse, obtenir une vitesse de véhicule courante et corriger la distance de suivi sur la base de la vitesse de véhicule courante ; et

ajuster l'angle de braquage de roue avant du véhicule sur la base de la distance latérale et de la distance de suivi corrigée.

**13.** Dispositif électronique, comprenant :

au moins un processeur ; et

une mémoire couplée pour la communication à l'au moins un processeur ;
dans lequel la mémoire est configurée pour stocker des instructions exécutables par le au moins un processeur, quand les instructions sont exécutées par le au moins un processeur, le au moins un processeur est configuré pour exécuter un procédé de stationnement automatique de l'une quelconque des revendications 1-7.

14. Support de stockage non transitoire lisible par ordinateur ayant des instructions informatiques stockées sur lui, dans lequel les instructions informatiques sont configurées pour amener un ordinateur à exécuter un procédé de stationnement automatique de l'une quelconque des revendications 1-7.

15. Produit de programme informatique, dans lequel, quand des instructions dans le produit de programme informatique sont exécutées par un processeur, un procédé de stationnement automatique de l'une quelconque des revendications 1-7 est mis en oeuvre.

| | 101 |
|---|---|
| obtaining a location point with a distance from a current location of a vehicle less than a preset distance and determining the location point as a target parking start point of the vehicle | |

↓

| | 102 |
|---|---|
| obtaining at least one candidate parking point related to the target parking start point based on the target parking start point | |

↓

| | 103 |
|---|---|
| selecting a target parking point without obstacles from the at least one candidate parking point, and obtaining a target parking trajectory driving from the target parking start point to the target parking point | |

↓

| | 104 |
|---|---|
| controlling the vehicle to track the target parking trajectory so as to park into the target parking point in accordance with the target parking trajectory | |

FIG. 1

| | 201 |
|---|---|
| obtaining an instruction for parking driving data collection | |

↓

| | 202 |
|---|---|
| determining a location point when the instruction for parking driving data collection is performed as the parking start point, and collecting parking driving data in real time during parking until the parking is completed | |

↓

| | 203 |
|---|---|
| performing a three-dimensional reconstruction based on the parking start point, the location point when the parking is completed and the parking driving data to generate the target parking trajectory | |

FIG. 2

301

obtaining posture information of the vehicle at each of the candidate parking points

302

constructing a candidate parking space with the posture information and the candidate parking point

303

identifying whether there is an obstacle in each of the candidate parking spaces, and determining the candidate parking point where there is no obstacle in the candidate parking space as the target parking point

FIG. 3

401

identifying whether a number of target parking trajectories is greater than a preset number

402

obtaining a length of each target parking trajectory, and selecting the target parking trajectory with the smallest length for tracking

FIG. 4

501

obtaining a traveling direction of the target parking trajectory based on the target parking trajectory

502

tracking the target parking trajectory based on the traveling direction

FIG. 5

601

determining a target tracking point on the target parking trajectory

602

determining a lateral distance and/or a tracking distance between the current location and the target tracking point based on the current location and the target tracking point

603

adjusting a front wheel steering angle of the vehicle in real time based on the traveling direction, the lateral distance and/or the tracking distance

FIG. 6

701

identifying the traveling direction as a forward direction, and obtaining a front wheel steering angle at a previous moment

702

adjusting a front wheel steering angle at a current moment by performing feedback control with the front wheel steering angle at the previous moment

FIG. 7

801

identifying the traveling direction as a reverse direction, obtaining a current vehicle speed, and correcting the tracking distance based on the current vehicle speed

802

adjusting the front wheel steering angle of the vehicle based on the lateral distance and the corrected tracking distance

FIG. 8

10

automatic parking apparatus 11

first obtaining module

12

second obtaining module

13

third obtaining module

14

control module

FIG. 9

memory 1002

1003

input device

bus

1004

output device

processor 1001

FIG. 10

**REFERENCES CITED IN THE DESCRIPTION**

**Patent documents cited in the description**

- KR 20160066776 A